# EUROPÄISCHE PATENTANMELDUNG

(11) **EP 1 355 217 A2**
(43) Veröffentlichungstag der Anmeldung: **22.10.2003**
(21) Anmeldenummer: 03007092.4
(22) Anmeldetag: 28.03.2003
(51) Int. Cl.: G06F 1/00

(54) **Kopierschutzverfahren**

(30) Priorität: 19.04.2002 DE 10217551
(71) Anmelder: Lotze, Helmut A., 26389 Wilhelmshaven (DE)
(72) Erfinder: Lotze, Helmut A., 26389 Wilhelmshaven (DE)
(74) Vertreter: Siekmann, Gunnar, Dipl.-Phys.

(57) **Zusammenfassung**

Bei einem Verfahren zum Erstellen eines Kopierschutzes von Software, bei dem einem auf einem oder mehreren Datenträgern gespeicherten Programm ein Datenträger zugeordnet wird, der durch eine Anzahl von unbrauchbaren Partien individualisiert ist und wobei bei der Installation und/oder im Betrieb des Programms in einer Datenverarbeitungsanlage anhand von gespeicherten Daten über die unbrauchbaren Partien geprüft wird, ob sich der individualisierte Datenträger in der Datenverarbeitungsanlage befindet, ist es wesentlich, daß sich die Daten über die unbrauchbaren Partien auf dem individualisierten Datenträger befinden und daß das zu schützende Programm oder eine vorbestimmte Gruppe oder Serie von Programmen mit einer nicht individualisierten Abfrageroutine die unbrauchbaren Partien des individualisierten Datenträgers mit den auf dem Datenträger gespeicherten Daten über die unbrauchbaren Partien vergleicht, so daß jedes Programm oder die vorbestimmte Gruppe oder Serie von Programmen mit einem beliebigen derartig individualisierten Datenträger mit gespeicherten Daten über die unbrauchbaren Partien betrieben werden kann.

## Beschreibung

Die Erfindung betrifft ein Verfahren zum Erstellen eines Kopierschutzes von Software, bei dem einem auf einem oder mehreren Datenträgern gespeicherten Programm ein Datenträger zugeordnet wird, der durch eine Anzahl von unbrauchbaren Partien individualisiert ist und wobei bei der Installation und/oder im Betrieb des Programms in einer Datenverarbeitungsanlage anhand von gespeicherten Daten über die unbrauchbaren Partien geprüft wird, ob sich der individualisierte Datenträger in der Datenverarbeitungsanlage befindet.

Das unberechtigte Vervielfachen bzw. Kopieren von Software (insbesondere von privat genutzten Programmen) stellt ein stetig wachsendes, wirtschaftliches Problem dar. Einen dauerhaft wirksamen Kopierschutz gibt es nicht und wird es wahrscheinlich auch in Zukunft nicht geben. Das Ziel eines Kopierschutzes kann folglich nur sein, daß Duplizieren bzw. die unrechtmäßige Verwendung von Software in möglichst weitreichendem Umfang zu erschweren. Hierzu werden unterschiedliche, auf Hardoder Software basierende Verfahren genutzt. Beispielhaft werden hier die softwareseitige Lösung: "Passwort-Abfrage" während der Installation und die hardwareseitige Lösung: "Hardlock bzw. Dongle" behandelt.

Zum Schutz vor mehrfacher Nutzung von Software wird auf dem entsprechenden Datenträger (meist CD-ROM) üblicherweise eine ihr/ihm zugehörige Ziffernund/oder Buchstabenfolge (folgend als "Passwort" bezeichnet) angehängt. Das Passwort wird in schriftlicher Form auf dem Datenträger selbst, in einem Begleitschreiben, einer Programmbeschreibung o.Ä. angegeben. Die Abfrage des Passwortes während der Installation der Software soll vor ihrer Vervielfachung schützen. Die Schutzfunktion kann jedoch bereits durch die zusätzliche Weitergabe des Passwortes umgangen werden. Die mehrfache Verwendung kann folgend erst erkannt werden, wenn sich mindestens zwei (der, dasselbe Programm verwendenden) Nutzer durch eine Registrierung beim Urheber kenntlich machen. Die Registrierung der Software erfolgt jedoch freiwillig und ist in diesem Fall eher unwahrscheinlich. Ein effektiver Kopierschutz besteht somit nicht. Dieses Verfahren setzt eine "individuelle Kennzeichnung" der Software voraus. Die Notwendigkeit jedem einzelnen Programm bei der Herstellung bzw. beim Beschreiben des entsprechenden Datenträgers ein einzigartiges Passwort zuzuordnen, erschwert die Serienfertigung und erfordert die eindeutige Zuordnung zwischen gespeichertem und schriftlich angegebenen Passwort. In der Patentanmeldung DE 199 39 124 A1 wird ein Verfahren beschrieben, bei dem bei der Installation der Software, auf der Basis von Rechner- und Software-Daten ein "dynamischer Identifizierungsschlüssel" erstellt wird, welcher zum Hersteller gesendet werden muß. Der Hersteller generiert aus diesen Daten den "dynamischen Zugangsschlüssel" und sendet diesen zurück. Dieses System schützt die Software zwar vor unberechtigter Verwendung, zwingt den Anwender jedoch dazu, sich registrieren zu lassen. Weiter kann der Bedarf eines neuen "dynamischen Zugangsschlüssel" (beispielsweise aufgrund eines defekten Rechners) vom Hersteller kaum kontrolliert werden.

Der Kopierschutz durch die Verwendung eines Hardlocks bzw. Dongles (üblicherweise an den Druckerport angeschlossen) setzt zur Funktion der Software das gleichzeitige Vorhandensein des Dongles voraus. Dieses System verhindert somit nicht die Vervielfachung sondern die mehrfache Verwendung der Software.

In der Patentanmeldung DE 199 63 471 A1 wird eine weitergehende Möglichkeit der Verwendung eines Hardlocks (in Form eines "Ausgabemittels für bidirektionalen Datenaustausch") beschrieben, welches über die Möglichkeit verfügt, Daten zu speichern. Diese Art des Schutzes vor mehrfacher Nutzung von Software ist zwar effektiv, wird jedoch aufgrund der verhältnismäßig hohen Kosten der Hardwarekomponente (des Dongles) eher selten und meist nur zum Schutz aufwendiger bzw. umfangreicher Software verwendet.

Eine weitere Möglichkeit besteht darin, individualisierte Datenträger zu verwenden und die auf dem Datenträger vorgenommene Individualisierung zur Prüfung auszuwerten. Derartige gattungsgemäße Verfahren sind beispielsweise aus der DE 195 10 436 A1, der DE 198 42 392 C1, der DE 100 35 598 A1 und der US 0 044 782 A1 bekannt.

Der Erfindung liegt die Aufgabe zugrunde, ein Verfahren der eingangs genannten Art zu schaffen, das besonders einfach und preiswert einsetzbar ist und auf effektive Weise die unberechtigte Verwendung von Software verhindert.

Die Lösung dieser Aufgabe erfolgt mit einem Verfahren mit den Merkmalen des Patentanspruch 1. Vorteilhafte Weiterbildungen der Erfindung sind in den Unteransprüchen beschrieben.

Bei dem Verfahren zum Erstellen eines Kopierschutzes von Software, bei dem einem auf einem oder mehreren Daten-trägern gespeicherten Programm ein Datenträger zugeordnet wird, der durch eine Anzahl von unbrauchbaren Partien individualisiert ist und wobei bei der Installation und/oder im Betrieb des Programms in einer Datenverarbei-tungsanlage anhand von gespeicherten Daten über die unbrauchbaren Partien geprüft wird, ob sich der individualisierte Datenträger in der Datenverarbeitungsanlage befindet, ist es erfindungswesentlich, daß sich die Daten über die unbrauchbaren Partien auf dem individualisierten Datenträger befinden und daß das zu schützende Programm oder eine vorbestimmte Gruppe oder Serie von Programmen mit einer nicht individualisierten Abfrageroutine die unbrauchbaren Partien des individualisierten Datenträgers mit den auf dem Datenträger gespeicherten Daten über die unbrauchbaren Partien vergleicht, so daß jedes Programm oder die vorbestimmte Gruppe oder Serie von Programmen mit einem beliebigen derartig individualisierten Datenträger mit gespeicherten Daten über die unbrauchbaren Partien betrieben werden kann. Mit diesem Verfahren ist eine leicht zu realisierende Möglichkeit gegeben, die unberechtigte Benutzung von Programmen zu verhindern.

Die Datenträger weisen allgemein einen zur Speicherung von Daten nutzbaren Speicherbereich auf. Die Anzahl der hierin speicherbaren Daten wird beispielsweise durch Beschädigungen der Datenträger-Oberfläche begrenzt. Bei der Formatierung eines Datenträgers werden u. A. die fehlerhaften Speicherbereiche ermittelt und ihre Lage, Größe, etc. beispielsweise in der FAT-, FAT32-, NTFS-Datei oder ähnlichem (folgend als "FAT-Datei" bezeichnet) gespeichert. Der Datenträger verfügt über mindestens einen zur Datenspeicherung unbrauchbaren Bereich, beispielsweise einen defekten Cluster. Die Anzahl, Anordnung, Lage oder ähnliches des/der zur Datenspeicherung unbrauchbaren Bereichs, Bereiche (folgend als "Kennzeichnung" bezeichnet) stellt ein eindeutiges Unterscheidungskriterium dar, welches mit herkömmlichen Laufwerken nicht kopiert werden kann. Neben der beim Formatieren des Datenträgers erstellten FAT-Datei ist mindestens eine weitere Datei auf diesem Datenträger gespeichert, welche diese Kennzeichnung beschreibt. Diese Datei enthält das im folgenden als "Vergleichsmuster" bezeichnete Muster. Wesentlich ist, daß die Datenverarbeitungsanlage von der Software zu mindestens einem Zeitpunkt zur Ermittlung der Kennzeichnung des Datenträgers veranlaßt wird. Hierzu kann der Datenträger beispielsweise zunächst partiell formatiert und die Information anschließend aus der FAT-Datei gelesen werden. Diese wird mit dem Vergleichsmuster verglichen. Hierzu wird jeweils mindestens der aus dem Vergleichsmuster resultierende bzw. darin definierte Bereich der Datenträger-Oberfläche untersucht oder formatiert, in dem die Kennzeichnung erwartet wird.

Neben dem Verfahren wird ein Datenträger zur Verwendung in einem solchen Verfahren beansprucht, der sich erfindungswesentlich dadurch auszeichnet, daß der Datenträger unbrauchbare Partien aufweist und dadurch individualisiert ist und daß der Datenträger eine Datei aufweist, in der Detailinformationen hinsichtlich der unbrauchbaren Partien vorhanden sind. Dieser Datenträger ist ein mobiler Datenträger, der bestimmungsgemäß zum Einsatz in einer Vielzahl verschiedener Datenverarbeitungsanlagen vorgesehen ist.

Eine Kopie des beispielsweise auf einer gekennzeichneten Diskette gespeicherten Vergleichsmusters oder der entsprechenden Datei auf eine andere Diskette ist nutzlos, da die Kennzeichnung des Datenträgers nicht kopiert werden kann. Zum Vergleich, also zur Ermittlung der Nutzungsberechtigung der erfindungsgemäß geschützten Software, wird jedoch die Kennzeichnung des Datenträgers benötigt. Kann bei dem Vergleich der Kennzeichnung mit dem Vergleichsmuster keine Übereinstimmung ermittelt werden, beispielsweise bei einer Kopie des Datenträgers, wird der vorliegende Datenträger als Duplikat erkannt. In diesem Fall kann beispielsweise die Installation der Software abgebrochen, ihr Programmstart verhindert oder auf andere Weise reagiert werden. Bevorzugt wird also bei einer fehlenden Übereinstimmung zwischen den unbrauchbaren Partien des individualisierten Datenträgers und den auf den Datenträgern gespeicherten Daten das Datenverarbeitungsgerät veranlaßt, mindestens eine Einschränkung der Softwarefunktion vorzunehmen. Mit handelsüblichen Laufwerken können die auf Datenträgern gespeicherten Daten gelesen und geschrieben werden. Die Kopie ihrer spezifischen Eigenschaften, wie beispielsweise ihre Speicherkapazität, ist mit diesen Geräten jedoch nicht möglich. Die Herstellung eines Duplikats eines individualisierten Original-Datenträgers durch Herstellung einer einfachen Kopie kann somit ausgeschlossen werden. Die unberechtigte Verwendung einer Software, die das erfindungsgemäße Verfahren mit einem derartig individualisierten Datenträger verwendet, kann somit ebenfalls ausgeschlossen werden.

Die gezielte Beschädigung der Datenträger-Oberfläche (beispielsweise durch die manuelle Einbringung eines Kratzers) stellt bereits eine ausreichend schwer nachzuahmende Kennzeichnung dar. Die Verwendung individueller Kennzeichnungen erfordert die Generierung des jeweils passenden Vergleichsmusters. Hierzu findet vorteilhaft ein gesondertes Programm Verwendung, welches zunächst die Größe, Lage etc. der fehlerhaften Speicherbereiche der Diskette ermittelt. Die so ermittelten Daten können (vorteilhaft nach individuell definierbaren Regeln verschlüsselt) in Form einer Datei gespeichert werden. Vorteilhaft enthält diese Datei auch Informationen über die räumlichen Grenzen der fehlerhaften Speicherbereiche. Hierdurch kann der zur Ermittlung der Kennzeichnung benötigte Zeitraum minimiert werden. Der Software muß folgend der zur Entschlüsselung des (gegebenenfalls verschlüsselten) Vergleichsmusters benötigte Code zugefügt werden. Gleichsam kann hierzu auch ein gesondertes Programm/Programmelement verwendet werden. Auf diese Weise können erfindungsgemäß kopiergeschützte Datenträger auch in kleinster Stückzahl und ohne den Zukauf gesonderter Gerätschaften/Werkzeuge auf äußerst günstige Weise hergestellt werden. Zudem sind, beispielsweise als Ersatz zu verwendende Datenträger (insbesondere: Disketten als gesonderte Installations-Legitimation) jederzeit und einzeln reproduzierbar. Durch die Speicherung des (verschlüsselten) Vergleichsmusters auf dem, bereits die Kennzeichnung aufweisenden Datenträger (beispielsweise: 3,5"-Diskette), entfällt die Notwendigkeit der Zuordnung zwischen Software und dem erfindungsgemäß gekennzeichneten Datenträger. Die Software (üblicherweise: auf CD-ROM) kann herstellerseitig in unveränderter Form (ohne die Zuordnung von Seriennummern o.Ä.) gespeichert werden. Die Verschlüsselung der Daten über die unbrauchbaren Partien kann auf eine Vielzahl verschiedener Weisen erfolgen. Die Art des verwendeten Schlüssels, beispielsweise die Multiplikation sämtlicher Daten mit dem Faktor 3, kann als Zuordnung für ein bestimmtes Programm oder eine vorbestimmte Gruppe oder Serie von Programmen verwendet werden, so daß ein bestimmter Programmtyp nur mit einem bestimmten individualisierten Datenträger bzw. einer zugehörigen Gruppe von Datenträgern, auf denen jeweils die unbrauchbaren Partien mit diesem speziellen Schlüssel gespeichert sind, verwendet werden kann.

Anhand anderer auf dem Datenträger gespeicherter Dateien/Daten können weitergehende Nutzungsbeschränkungen bzw. -berechtigungen definiert werden.

Eine zur Durchführung des Verfahrens verwendete Diskette oder CD-ROM kann bevorzugt eine die Anzahl zulässiger sowie bereits vorgenommener Softwareinstallationen (beispielsweise bei "Mehrplatz-Software-Versionen") beschreibende Datei enthalten, die bei jeder Installation aktualisiert wird (Heraufsetzen einer Zähler-Variablen: Anzahl bereits getätigter Installationen). Wird die zulässige Anzahl überschritten, kann die neue Installation beispielsweise abgebrochen werden. Ebenfalls können auf einer erfindungsgemäß geschützten Diskette, Dateien/Daten gespeichert werden, welche die Datenverarbeitungsanlage/anlagen kennzeichnen, auf der/denen die Software bereits installiert wurde. Hierzu bietet sich vorteilhaft die Speicherung der Seriennummer der Festplatte, Grafikkarte oder anderer Datenverarbeitungsanlagen-spezifischer Eigenschaften (folgend als "Rechnercode" bezeichnet) an. Durch die Installation einer "Einplatz-Software" auf einer zweiten Datenverarbeitungsanlage (deren Rechnercode von dem so gespeicherten Code abweicht) kann diese Datei oder den Daten beispielsweise ein, die Neuinstallation bzw. die Funktion auf dem ursprünglichen Rechner ausschließendes Kriterium angehängt werden. Ein so definierter Ausschluß ist endgültig und kann nicht rückgängig gemacht werden.

Weiter kann die installierte Software bzw. ihr untergeordnete Programmelemente oder darin enthaltene Komponenten den Anwender in regelmäßigen oder zufälligen zeitlichen Abständen (beispielsweise beim Programmstart) zum Einlegen des originalen Datenträgers auffordern und folgend die Originalität prüfen. Hierbei kann (bei Verwendung eines erfindungsgemäß geschützten, beschreibbaren Datenträgers) ebenfalls ermittelt werden, ob der verwendete Rechner (der gespeicherte Rechnercode) durch die Installation der Software auf einem anderen Rechner möglicherweise bereits ausgeschlossen wurde. In diesem Fall könnte der Startvorgang abgebrochen oder auf ähnliche Weise reagiert werden.

Der Vergleich zwischen Beschädigungs- und Vergleichsmuster sowie die evtl. wiederholte Kontrolle der Nutzungsberechtigung kann durch ein eigenständiges/zusätzliches Programm oder eine Programmkomponente erfolgen, welches/welche zusammen mit der Software installiert wird und diese folgend über die Recht- oder Unrechtmäßigkeit der Installation bzw. Benutzung der Software informiert. Als der Software beigefügtes Programm bzw. beigefügte Komponente kann es/sie von der Software angesprochen, selbständig die jeweilige Zulässigkeit ermitteln und die Software über das Ergebnis der Ermittlung informieren.

Nachfolgend wird die Erfindung anhand einer in einer Prinzip-Skizze dargestellten möglichen Ausführungsform weiter erläutert. Die Darstellung zeigt in:
- Fig. 1:: einen erfindungsgemäß gekennzeichneten Datenträger (hier: 3,5"-Diskette) und in
- Fig. 2:: ein mögliches Verfahren zur Verhinderung unberechtigter Verwendung von Software.

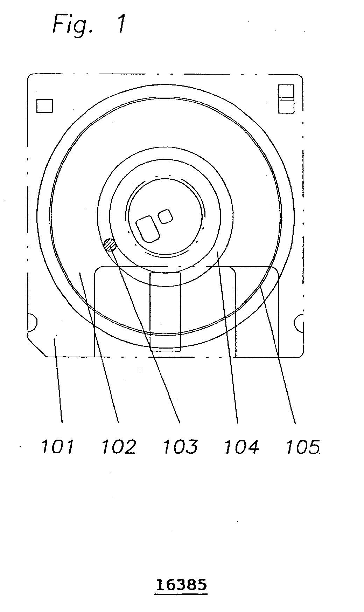

In Fig. 1 ist eine handelsübliche 3,5"-Diskette (101) dargestellt, die über eine Datenträger-Oberfläche (102) und (auch nach dem Einbringen der Kennzeichnung (103)), über die Fähigkeit verfügt, diverse Dateien/Daten zu speichern. Beispielhaft besteht die Kennzeichnung aus einer kreisrunden Aussparung (Loch) in der Datenträger-Oberfläche. Gleichsam sind eine Vielzahl verschiedener Arten der Kennzeichnung (beispielsweise Kratzer oder andere Beschädigungen) möglich. Die, das Vergleichsmuster enthaltende Datei (105) befindet sich im fehlerfreien Bereich der Datenträger-Oberfläche. Diese Datei beinhaltet: die Kennzeichnung beschreibende Daten sowie Angaben zur Eingrenzung der (zur Ermittlung der Kennzeichnung) zu prüfenden Oberfläche des Datenträgers (104).

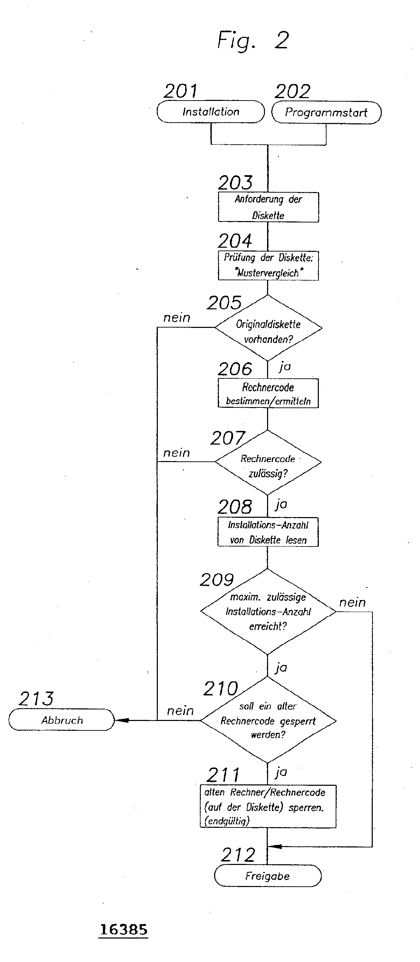

Das in Fig. 2 dargestellte Verfahren wird durch verschiedene Ereignisse (beispielsweise durch die Installation der Software (201)) oder in regelmäßigen oder unregelmäßigen zeitl. Abständen (beispielsweise jeweils beim Start der Software (202)) ausgelöst. Hierbei wird der Anwender zunächst zum Einlegen des originalen Datenträgers aufgefordert (203), deren Kennzeichnung folgend ermittelt und mit dem Vergleichsmuster verglichen wird (204). Differieren diese voneinander, wird die Installation abgebrochen bzw. die Programmfunktion verhindert (213). Andernfalls, wird mit dem Auslesen des auf der Diskette gespeicherten Rechnercodes und dem Vergleich mit dem aktuellen (Rechner-internen) Code fortgefahren (206). Wird der Code des aktuellen Rechners (Datenverarbeitungsanlage) als unzulässig (bereits gesperrt) erkannt, führt dies zum Abbruch (213). Ist der Rechnercode jedoch zulässig, wird die (auf der Diskette gespeicherte) maximal zulässige Anzahl (im Regelfall: eine) mit der Anzahl vorangegangener Installationen verglichen (208, 209). Wenn die Installation der Software auch hierbei als zulässig erkannt wird, wird die Installation abgeschlossen bzw. der Programmstart fortgesetzt (12). Wurde die zulässige Anzahl von Installationen erreicht, führt dies ebenfalls zum Abbruch (213). Der Anwender kann jedoch auch den aktuellen Rechner als berechtigte Recheneinheit definieren (210). Hierdurch wird die Installation fortgesetzt oder die Programmfunktion freigegeben. Ebenfalls werden einem (vom Anwender zu bestimmenden) Rechner, auf dem die Software bereits vorab installiert wurde, die zur Ausführung benötigten Rechte entzogen bzw. sein (auf der Diskette gespeicherter) Rechnercode gesperrt (211). Bei der nächsten Anforderung der Diskette (durch die Software auf dem nunmehr unberechtigten Rechner) und der darauf folgenden Prüfung wird die Sperrung/der Ausschluß erkannt (207) und die Programmfunktion von da an verweigert werden.

## Patentansprüche

1. Verfahren zum Erstellen eines Kopierschutzes von Software, bei dem einem auf einem oder mehreren Datenträgern gespeicherten Programm ein Datenträger zugeordnet wird, der durch eine Anzahl von unbrauchbaren Partien individualisiert ist und wobei bei der Installation und/oder im Betrieb des Programms in einer Datenverarbeitungsanlage anhand von gespeicherten Daten über die unbrauchbaren Partien geprüft wird, ob sich der individualisierte Datenträger in der Datenverarbeitungsanlage befindet,
**dadurch gekennzeichnet,**
**daß** sich die Daten über die unbrauchbaren Partien auf dem individualisierten Datenträger befinden und daß das zu schützende Programm oder eine vorbestimmte Gruppe oder Serie von Programmen mit einer nicht individualisierten Abfrageroutine die unbrauchbaren Partien des individualisierten Datenträgers mit den auf dem Datenträger gespeicherten Daten über die unbrauchbaren Partien vergleicht, so daß jedes Programm oder die vorbestimmte Gruppe oder Serie von Programmen mit einem beliebigen derartig individualisierten Datenträger mit gespeicherten Daten über die unbrauchbaren Partien betrieben werden kann.

2. Verfahren nach Anspruch 1, **dadurch gekennzeichnet, daß** die Abfrageroutine bei einer fehlenden Übereinstimmung zwischen den unbrauchbaren Partien des individualisierten Datenträgers und den auf den Datenträgern gespeicherten Daten die Datenverarbeitungsanlage mindestens zu einer Einschränkung der Software-Funktionen veranlaßt.

3. Verfahren nach einem der Ansprüche 1 oder 2, **dadurch gekennzeichnet, daß** die Datenverarbeitungsanlage zu mindestens einem Zeitpunkt, insbesondere beim Installationsvorgang, von der Software veranlaßt wird, die Anzahl zulässiger Installationen der auf dem Datenträger gespeicherten Anzahl bereits vorgenommener Installationen zu prüfen und die gespeicherte Anzahl unter Berücksichtigung der aktuellen Installation zu aktualisieren.

4. Verfahren nach einem der vorhergehenden Ansprüche, **dadurch gekennzeichnet, daß** die Datenverarbeitungsanlage, insbesondere während des Installationsvorgangs, von der Software veranlaßt wird, mindestens eine kennzeichnende Eigenschaft, insbesondere die Seriennummer seiner Festplatte, nachfolgend Rechnercode genannt, in mindestens einer Datei auf dem Datenträger zu speichern.

5. Verfahren nach Anspruch 4, **dadurch gekennzeichnet, daß** bei Ermittlung einer unzulässigen Anzahl vorgenommener Installationen der gespeicherte Rechnercode mindestens einer Datenverarbeitungsanlage, insbesondere durch das Anhängen eines bestimmten Datenwortes, diese Datenverarbeitungsanlage bei einer weitergehenden Prüfung als unberechtigt erkannt wird.

6. Verfahren nach einem der vorhergehenden Ansprüche, **dadurch gekennzeichnet, daß** die Datenverarbeitungsanlage, insbesondere in unregelmäßigen zeitlichen Abständen, von der Software veranlaßt wird, den individualisierten Datenträger anzufordern und erneut das Verfahren gemäß Anspruch 1 durchzuführen.

7. Verfahren nach einem der vorhergehenden Ansprüche, **dadurch gekennzeichnet, daß** die Datenverarbeitungsanlage, insbesondere in unregelmäßigen zeitlichen Abständen, von der Software veranlaßt wird, den individualisierten Datenträger anzufordern und die weitere andauernde Rechtmäßigkeit der Verwendung der Software zu überprüfen, indem der Verfahrensschritt gemäß Anspruch 5 durchgeführt wird.

8. Verfahren nach einem der vorhergehenden Ansprüche, **dadurch gekennzeichnet, daß** die auf dem individualisierten Datenträger gespeicherten Daten über die unbrauchbaren Partien in verschlüsselter Form gespeichert werden.

9. Verfahren nach Anspruch 8, **dadurch gekennzeichnet, daß** die Verschlüsselung der gespeicherten Daten ein Zuordnungskriterium für ein bestimmtes Programm oder eine vorbestimmte Gruppe oder Serie von Programmen ist, die mit einem beliebigen derart individualisierten Datenträger, der mit dieser Verschlüsselung gespeicherte Daten über die unbrauchbaren Partien aufweist, betrieben werden kann.

10. Verfahren nach einem der vorhergehenden Ansprüche, **dadurch gekennzeichnet, daß** die auf dem Datenträger gespeicherten Daten über die unbrauchbaren Partien Angaben über den Ort der unbrauchbaren Partien im Datenträger enthalten.

11. Datenträger zur Verwendung in einem Verfahren nach einem der vorhergehenden Ansprüche, **dadurch gekennzeichnet, daß** der Datenträger unbrauchbare Partien aufweist und dadurch individualisiert ist und daß der Datenträger eine Datei aufweist, in der Detailinformationen hinsichtlich der unbrauchbaren Partien vorhanden sind.
